Europäisches Patentamt

European Patent Office

Office européen des brevets

(11) Veröffentlichungsnummer: **0 457 119 A2**

# (12) EUROPÄISCHE PATENTANMELDUNG

(21) Anmeldenummer: 91107145.4

(51) Int. Cl.5: **A61J 1/10**

(22) Anmeldetag: 03.05.91

(30) Priorität: 18.05.90 DE 4016143

(43) Veröffentlichungstag der Anmeldung:
**21.11.91 Patentblatt 91/47**

(84) Benannte Vertragsstaaten:
**AT BE CH DE DK ES FR GB GR IT LI LU NL SE**

(71) Anmelder: **Fresenius AG**
**Gluckensteinweg 5**
**W-6380 Bad Homburg v.d.H.(DE)**

(72) Erfinder: **Ufermann, Rüdiger**
**Scherpenberger Strasse 111**
**W-4130 Moers 1(DE)**

(74) Vertreter: **Dr. Fuchs, Dr. Luderschmidt**
**Dipl.-Phys. Seids, Dr. Mehler Patentanwälte**
**Abraham-Lincoln-Strasse 7, Postfach 4660**
**W-6200 Wiesbaden(DE)**

(54) **Vorrichtung vorzugsweise für die enterale Ernährung.**

(57) Die Erfindung betrifft eine Vorrichtung (1), die insbesondere für die enterale Ernährung geeignet ist und die zur wiederholten Entnahme und Applizierung genau bestimmbarer Volumina mit einer Entnahmeeinrichtung (3) versehen ist, die ein in einem Gefäß (2) der Vorrichtung (1) verschiebbares Rohr (4) aufweist, und die mit einer Volumenmarkierungseinrichtung (5) zusammenwirkt, so daß das jeweils zu entnehmende Volumen entsprechend der Stellung des Rohres (4) im Gefäß (2) bestimmbar ist.

FIG.1

Die Erfindung betrifft eine Vorrichtung, vorzugsweise für die enterale Ernährung mit wenigstens einem Gefäß zur Aufnahme der zu verabreichenden Nahrungslösung und mit einer Entnahmeeinrichtung zum Herausleiten der Nahrungslösung aus dem Gefäß, welche ein im Gefäß verschiebbares Rohr aufweist, mit einer Volumenmarkierungseinrichtung zur Anzeige der zu entnehmenden Volumen an Nahrungslösung, und mit einer wahlweise verwendbaren Entlüftungsvorrichtung.

Die US-PS 3,204,633 beschreibt eine Infusionsvorrichtung mit einem automatischen, volumetrischen Ventilmechanismus. Bei dieser Vorrichtung ist ein Gefäß vorgesehen, in welchem sich die zu verabreichende Lösung befindet. Das Gefäß umfaßt eine Entlüftungsvorrichtung sowie ein verschiebbar gelagertes Rohr, durch welches die Lösung nach unten aus dem Gefäß abgeleitet werden kann. Das Rohr ist hinsichtlich seines oberen Randes auf ein gewünschtes Niveau einzustellen, so daß die zu verabreichende Volumenmenge der Lösung jeweils abgegeben werden kann. Die vorbekannte Einrichtung umfaßt eine starre Flasche, in deren Ausgußöffnung ein Verschluß oder Deckel eingesetzt ist, in dem sowohl das Rohr als auch die Entlüfungsvorrichtung gehaltert sind. Hierbei stellt insbesondere die Abdichtung des verschiebbaren Rohres ein besonderes Problem dar, da einerseits ein unbeabsichtigtes Austreten der Lösung verhindert als auch eine Kontamination der Lösung unterbunden werden müssen.

Die DE-PS 36 12 718 beschreibt einen Behälter zum Portionieren bei enteraler Ernährung, welcher als Beutel ausgebildet ist. In den Innenraum des Beutels ragt ein mit einer Vielzahl von Sollbruchstellen versehenes Rohr, dessen freie Enden jeweils so abbrechbar sind, daß eine vorbestimmte Volumenmenge ausbringbar ist. Bei dieser Ausgestaltung eines Beutels ist es nachteilig, daß beim Abbrechen des Rohres der Beutel beschädigt werden kann. Weiterhin ist die Gefahr gegeben, daß beim Abbrechen der Rohrenden Bruchpartikel ausgeleitet und an den Patienten überführt werden.

Die Erfindung liegt die Aufgabe zugrunde, eine Vorrichtung der im Oberbegriff des Hauptanspruchs genannten Art zu schaffen, welche vorzugsweise für die enterale Ernährung geeignet ist und welche bei einfacher Herstellbarkeit und sicherer Anwendbarkeit eine wiederholbare Entnahme vorgegebener Volumenmengen ermöglicht.

Die Lösung dieser Aufgabe erfolgt dadurch, daß das Gefäß mit einer Dichtungsanordnung versehen ist, die am Gefäßauslaß angeordnet ist, durch die das Rohr verläuft und die als Doppeldichtung ausgebildet ist und zwei in Längsrichtung des Rohres gesehen beabstandete Dichtungselemente aufweist.

Mit der Erfindung wird eine einfach aufgebaute und zu handhabende Vorrichtung geschaffen, die insbesondere für die enterale Ernährung geeignet ist, und mit der aus einem Gefäß in Form einer Flasche oder eines Beutels durch einfaches Hoch- oder Herunterziehen eines in das Gefäß hineinragenden Rohres der Entnahmeeinrichtung bestimmte vorgegebene Nahrungsmengen insbsondere per Schwerkraft wiederholbar entnommen und appliziert werden können.

Somit weist die erfindungsgemäße Vorrichtung eine Portionierungseinrichtung auf, mit der es vorteilhafterweise möglich ist, eine Bolusgabe beliebig oft mit demselben System wiederholbar und exakt auszuführen.

Die Unteransprüche haben vorteilhafte Weiterbildungen der Erfindung zum Inhalt.

Ist das Rohr der Entnahmeeinrichtung an seinem im Gefäß befindlichen Ende mit einem verdickten Endstück versehen, kann vorteilhafterweise das unerwünschte Herausziehen des Rohres aus dem Gefäß verhindert werden. Ferner ergibt sich der Vorteil, daß das verdickte Endstück darüber hinaus als Zeiger verwendet werden kann, der im Zusammenwirken mit der Volumenmarkierungseinrichtung das zu entnehmende gewünschte Volumen der Nahrungslösung exakt anzeigt.

Ist das Gefäß der erfindungsgemäßen Vorrichtung mit einer Dichtungsanordnung versehen, die am Gefäßauslaß angeordnet ist und durch die das Rohr hindurchläuft, wird vorteilhafterweise das unerwünschte Ausfließen von Nahrungslösung aus der Gefäßöffnung verhindert, da die Nahrungsentnahme vorteilhafterweise durch Schwerkrafteinwirkung erfolgt, bei der das Gefäß mit nach unten weisender Auslaßöffnung angeordnet wird.

Eine besonders sichere Abdichtung wird erreicht, wenn die Dichtungsanordnung als Doppeldichtung ausgebildet ist. In diesem Falle sind zwei Dichtungselemente vorgesehen, die in Längsrichtung des Rohres der Entnahmeeinrichtung gesehen einen Abstand zueinander aufweisen, so daß sich zwei Dichtungsstellen ergeben, die unabhängig voneinander sind und somit die Sicherheit gegen ein unerwünschtes Auslaufen von Nahrungslösung erhöhen.

Die Entnahmeeinrichtung der erfindungsgemäßen Vorrichtung kann ferner mit einem Anschlußabschnitt versehen werden, der an dem Ende des Rohres angeordnet ist, das außerhalb des Gefäßes liegt und an dem ein zum Patienten führender Nahrungsschlauch angeschlossen werden kann.

Um bei wiederholtem Einsatz eine Kontamination auszuschliessen, kann von der Doppeldichtung in der Länge des ausgezogenen Rohres bis zum Schlauchansatz ein dehnbarer Schutzschlauch angebracht werden.

Zur Anpassung an unterschiedliche Gefäßtypen ist es ferner möglich, die Volumenmarkierungseinrichtung entweder auf der Gefäßwandung selbst aufzubringen oder das verschiebbare Rohr der Entnahmeeinrichtung mit der Volumenmarkierungseinrichtung zu versehen, die vorteilhafterweise in Form einer bezifferten Skala ausgebildet ist, die beispielsweise 100er Schritte einer Milliliterskalierung wiedergeben kann.

Vorteilhafterweise kann das Gefäß als Beutel ausgebildet sein, der kollabierbar ist und somit während der Entnahme von Nahrungslösung aufgrund seiner Elastizität den erforderlichen Volumenausgleich schafft.

Eine weitere vorteilhafte Ausgestaltung des Gefäßes der erfindungsgemäßen Vorrichtung ist eine Flasche, die zur Führung des Rohres der Entnahmeeinrichtung bei einer besonders bevorzugten Ausführungsform mit einer Aufsteckvorrichtung versehen ist. Die Aufsteckvorrichtung wird am Flaschenhals befestigt und nimmt bei einer weiteren bevorzugten Ausführungsform die Dichtungsanordnung auf. Ferner kann die Aufsteckvorrichtung mit einer integrierten Belüftungseinrichtung in Form eines Belüftungskanales versehen sein.

Da erfindungsgemäß das Auslaufrohr vertikal verschiebbar ist, ist es dem Bedienungspersonal freigestellt, beliebige Nahrungsmittelmengen aus dem Behälter abzuführen und diese an die jeweiligen Anforderungen des Patienten anzupassen. Es ist nunmehr möglich, den Behälter schrittweise zu entleeren, ohne daß konstruktiv einzelne Entleerungsstufen vorgegeben werden. Durch die Verschiebbarkeit des Auslaufrohres wird weiterhin die aus dem Stand der Technik bekannte, bei Beuteln auftretende Heberwirkung vermieden, so daß es lediglich erforderlich ist, das Auslaufrohr geringfügig nach oben über das Flüssigkeitsniveau zu verschieben, um den Entleerungsvorgang zu unterbrechen.

Weiterhin erweist es sich als vorteilhaft, daß die Handhabung des erfindungsgemäßen Behälters besonders einfach ist, so daß auch ungeübte Bedienungspersonen die jeweiligen zu entnehmenden Nahrungsmittelmengen einstellen können, ohne daß Beschädigungen des Behälters zu befürchten sind.

In einer besonders günstigen Ausgestaltung der Erfindung ist vorgesehen, daß das Auslaufrohr in einer Dichtung am Behälter gehaltert ist. Durch die zusätzliche Dichtung ist auch bei flüssigem Behälterinhalt eine sichere Abdichtung gewährleistet, selbst dann, wenn das Auslaufrohr mehrfach verschoben wird.

Um den Bedienungspersonen das stufenweise Entleeren des Behälters zu erleichtern und um eine Kontrolle über die bereits abgegebene Volumenmenge vornehmen zu können, ist in einer Weiterbildung der Erfindung vorgesehen, daß der Behälter mit einer Skalierung zur Einstellung des Auslaufrohres bzw. dessen Oberkante versehen ist.

In einer besonders günstigen Ausgestaltung der Erfindung ist der Behälter in Form eines Beutels ausgebildet. Dies weist den Vorteil auf, daß zum einen die Herstellungskosten erheblich gesenkt werden können und daß zum anderen bei der Entsorgung des entleerten Behälters nur ein geringes Restvolumen anfällt.

Der erfindungsgemäße Beutel kann bevorzugterweise an seinem oberen Bereich eine verschließbare Entlüftungsöffnung aufweisen, um den bereits erwähnten Hebereffekt auszuschließen, da die Entlüftung des Beutels einem Selbstkollabieren des Beutels entgegenwirkt.

Um ein Austreten des Beutelinhalts, beispielsweise bei Bewegungen des Beutels oder beim Kippen desselben zu verhindern, ist die Entlüftungsöffnung bevorzugterweise mit einem hydrophoben Filter ausgestattet.

Weitere Einzelheiten, Merkmale und Vorteile der Erfindung ergeben sich aus nachfolgender Beschreibung zweier Ausführungsbeispiele anhand der Zeichnung.

Es zeigt:

Fig. 1   eine schematisch vereinfachte Darstellung einer ersten Ausführungsform der erfindungsgemäßen Vorrichtung

Fig. 2   eine der Fig. 1 entsprechende Darstellung einer zweiten Ausführungsform.

Fig. 3   eine schematische Seitenansicht eines weiteren Ausführungsbeispiels des erfindungsgemäßen Beutels mit einer Skalierung und einer Entlüftungseinrichtung,

Fig. 4   eine schematische Darstellung eines Ausführungsbeispiels des erfindungsgemäßen Verschlußelements, und

Fig. 5   ein weiteres Ausführungsbeispiel eines Entlüftungselements.

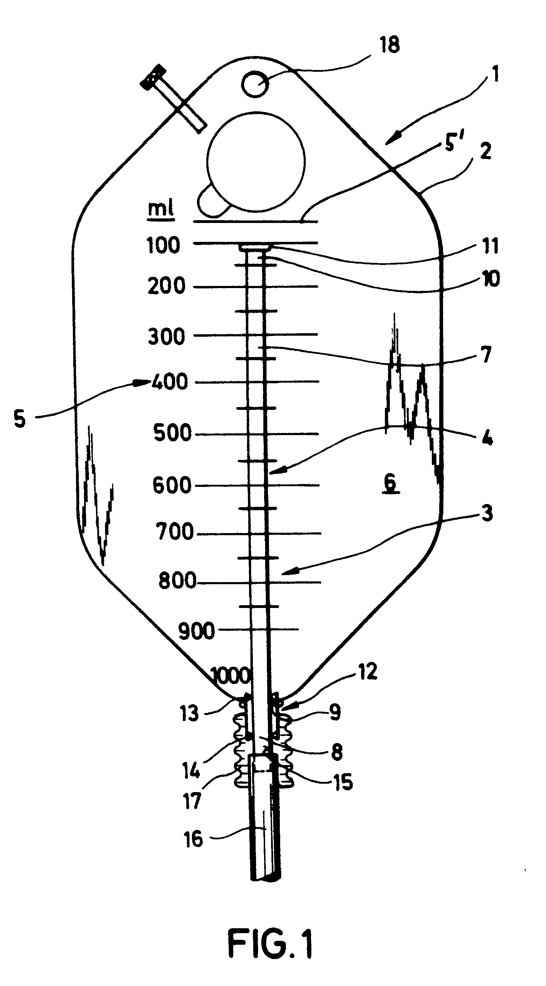

In Fig. 1 ist eine erfindungsgemäße Vorrichtung 1 dargestellt, die vorzugsweise für die enterale Ernährung geeignet ist. Die Vorrichtung 1 weist ein Gefäß 2 auf, das im Beispielsfalle als flexibler Beutel ausgebildet ist. Ein derartiger Beutel kollabiert bei der Entnahme von Flüssigkeit und schafft dabei den zur Flüssigkeitsentnahme erforderlichen Volumenausgleich.

Die Vorrichtung 1 gemäß der Ausführungsform der Fig. 1 weist ferner eine Entnahmeeinrichtung 3 auf, die im Gefäß bzw. Beutel 2 angeordnet ist und ein verschiebbares Rohr 4 aufweist, dessen Funktion nachfolgend näher beschrieben werden wird.

Ferner weist die Vorrichtung 1 eine Volumenmarkierungseinrichtung 5 auf, die im Beispielsfalle eine Skalierung auf einer der Beutelwandungen 6 umfaßt. Wie Fig. 1 verdeutlicht, ist die Skalierung in 100er Schritte aufgeteilt und in Milliliter angegeben.

Fig. 1 verdeutlicht hierbei, daß das Rohr 4 mit einem Teil 7 innerhalb des Beutels 2 angeordnet ist, während der andere Teil 8 des Rohres 4, der durch eine Gefäßauslaßöffnung 9 hindurch verläuft, außerhalb des Gefäßes 2 angeordnet ist. Der im Gefäß befindliche Teil 7 des Rohres 4 weist an einem Ende 10 ein Endstück 11 auf, das gegenüber dem Außendurchmesser des Teiles 7 des Rohres 4 verdickt ist. Dieses Endstück 11 dient somit zum einen als Schutz gegen ein Herausziehen des Rohres 4 aus dem Beutel, da das verdichtete Endstück 11 einen größeren Außendurchmesser aufweist als die Auslaßöffnung 9. Ferner kann das Endstück 11 zur Volumenanzeige herangezogen werden, da es eine genaue Positionierung des im Gefäß 4 befindlichen Abschnittes 7 des Rohres 4 auf einer der Skalierungen der Volumenmeßeinrichtung 5 ermöglicht. Im Beispielsfalle ist das Endstück 11 auf die Markierung "100 ml" eingestellt, was bedeutet, daß im Falle einer Entnahme, ausgehend von einer oberen Füllstandsmarkierung 5', genau 100 ml Nahrungslösung dem Gefäß 2 entnommen werden können. Zur Einstellung wird das Rohr, das mit seinem äußeren Bereich 8 durch eine Dichtungsanordnung 12 hindurch verläuft, auf die jeweilige Markierung gebracht, was vorzugsweise dadurch geschieht, daß das Rohr 4 aus seiner sonst zum Beutel 1 zentrischen Lage herausgebracht wird und gegen die entsprechende Volumenmarkierung gedrückt wird. Dies ergibt den Vorteil einer schnellen und einfachen Volumeneinstellung.

Die Dichtungsanordnung 12 bringt zur Halterung des Rohres 4 eine Haftreibung von ca. 1KP auf und ist im Beispielsfalle als Doppeldichtung ausgebildet und weist daher zwei Dichtungselemente 13 und 14 auf, die in Axialrichtung des Rohres 4 gesehen einen gewissen Abstand zueinander aufweisen. Die Darstellung der Fig. 1 verdeutlicht hierbei, daß die Dichtungsanordnung 12 in der Auslaßöffnung 9 festgelegt ist und daß das Rohr 4 mit seinem außenliegenden Abschnitt 8 durch die Dichtungsanordnung 12 hindurch verläuft.

Das Rohr 4 weist in seinem Außenabschnitt 8 ferner einen Anschlußabschnitt 15 auf, an dem ein Schlauch 16 befestigt werden kann. Dieser Schlauch 16 dient zur Weiterleitung der dem Beutel entnommenen Nahrungslösung beispielsweise zu einem enteral zu ernährenden Patienten.

Im Übergangsbereich zwischen der Dichtungsanordnung 12 und dem Schlauch 16 ist bei der in Fig. 1 dargestellten Ausführungsform vorzugsweise ein dehnbarer Schutzschlauch 17 angeordnet, der den Anschlußbereich zwischen Rohr 4 und Schlauch 16 abdeckt und somit verhindern kann, daß Kontaminationen auftreten, wobei die Dehnbarkeit des Schutzschlauches 17 unterschiedliche Verschiebestellungen des Rohres 4 zur Entnahme unterschiedlicher Volumenmengen gestattet, ohne daß eine Bloßlegung des Übergangsbereiches zu befürchten wäre.

Fig. 1 verdeutlicht schließlich, daß der Beutel 2 ansonsten eine Aufhängeöffnung 18 aufweist, an der der Beutel 2 an einer geeigneten Vorrichtung aufgehängt werden kann und daß die Volumenentnahme durch Schwerkraftwirkung erfolgt.

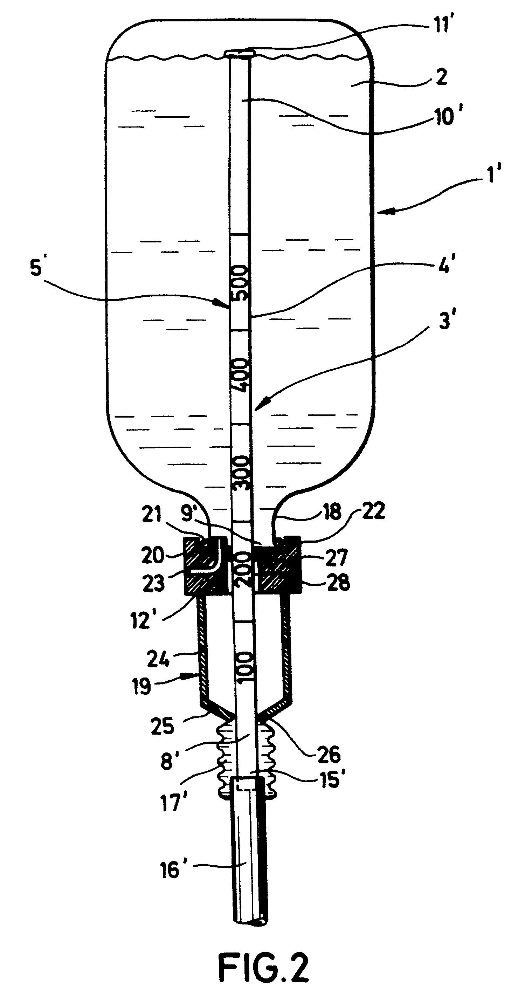

In Fig. 2 ist eine zweite Ausführungsform einer erfindungsgemäßen Vorrichtung 1' gezeigt, die im Gegensatz zu der zuvor beschriebenen Ausführungsform als Gefäß 2' eine Flasche, vorzugsweise aus Glas, aufweist. Die Flasche 2' weist einen Flaschenhals 18 auf, der in der Auslaßöffnung 9' endet und auf dem eine Aufsteckvorrichtung 19 befestigt ist. Die Aufsteckvorrichtung 19 weist eine Befestigungsteil 20 auf, das mit einer kreisförmig umlaufenden Haltenut 21 versehen ist, in die ein Haltwulst 22 des Flaschenhalses 18 derart eingreift, daß zum einen die Aufsteckvorrichtung 19 an der Flasche 2' befestigt ist und zum anderen gleichzeitig eine Abdichtung im Bereich des Wulstes 22 erreichbar ist.

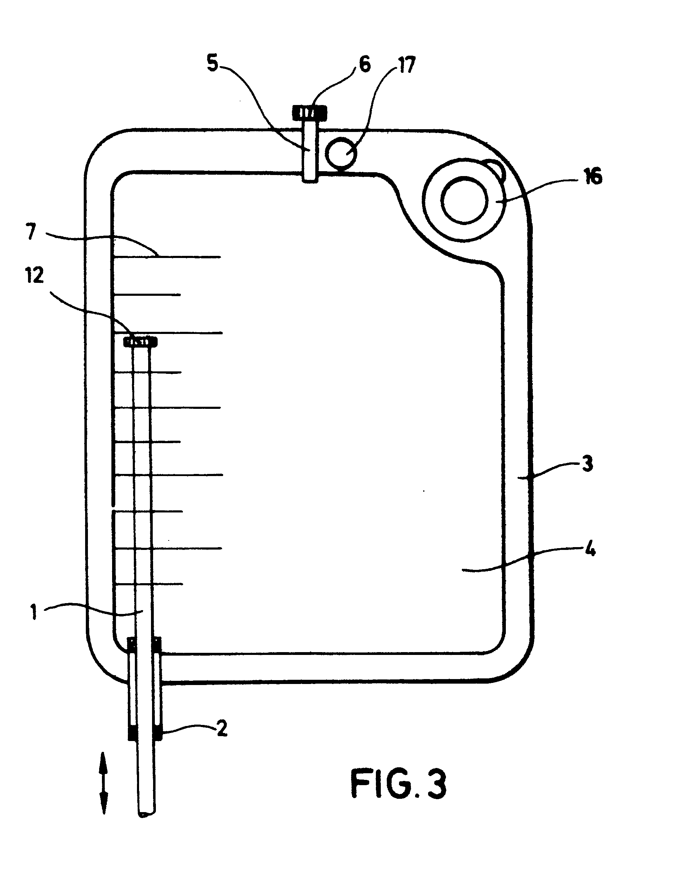

Der Befestigungsteil 20 weist ferner einen im Beispielsfalle L-förmigen Belüftungskanal 23 auf, der sich in den Innenraum der Flasche 2' öffnet und bei der Entnahme von Flüssigkeit durch Luftzufuhr den nötigen Volumenausgleich möglich macht. Vorzugsweise kann der Belüftungskanal 23 mit einem in Fig. 1 dargestellten hydrophoben Filter versehen sein, das eine Kontamination des Innenraums der Flasche 2' und damit der in ihr befindlichen Nahrungslösung verhindert. Das Filter ist in einem Rohrelement eingesetzt und verschließt somit einen Verbindungskanal zur Umgebung hin, so daß ein Eindringen von Bakterien etc. vermieden wird. Durch den Verbindungskanal ist eine Be- oder Entlüftung des Beutels geschaffen, wie auch bei dem in Fig. 3 gezeigten Ausführungsbeispiel.

Ferner kann der Belüftungskanal 23 zum Öffnen im Bedarfsfall mit einer Sollbruchstelle, die von außen zugänglich ist, oder mit einem Silikonverschluß versehen werden, der den Vorteil ergibt, daß der Belüftungskanal 23 wieder verschlossen werden kann. Alternativ kann das Gefäß ferner mit einer mit Filter versehenen Kanüle belüftet werden.

Anschließend an das Befestigungsteil 20 weist die Aufsteckvorrichtung 19 ein Verlängerungsteil 24 auf, das in seinem Hauptteil zylindrisch ausgebildet ist und einen konisch zulaufenden Endteil 25 aufweist, in dessen Durchgangsausnehmung ein Dichtelement 26 einer Dichtungsanordnung vorgesehen ist, die im Beispielsfalle ebenfalls als Doppeldichtung ausgebildet ist und mithin ein zweites Dichtungselement 27 aufweist, das in einer Durchgangsausnehmung 28 des Befestigungsteiles 20 in axialem Abstand zum Dichtungselement 26 angeordnet ist.

Wie Fig. 2 verdeutlicht, verläuft ein außerhalb des Flascheninnenraumes vorliegender Abschnitt 8' des Rohres 4' durch die beiden Dichtungselemente 26 und 27 und mithin durch die Aufsteckvorrichtung 19 hindurch. Der außenliegende Abschnitt 8' ist wie die Ausführungsform gemäß Fig. 1 mit einem Anschlußabschnitt 15' versehen, an dem ein Schlauch 16' befestigt ist. Ebenfalls ist ein dehnbarer Schutzschlauch 17' im Bereich des Anschlusses des Schlauches 16' vorgesehen.

Als ein weiterer Unterschied zur Ausführungsform gemäß Fig. 1 weist die Vorrichtung 1' eine Volumenmarkierungseinrichtung 5' auf, die auf dem Rohr 4' aufgebracht ist. Ferner weist das Rohr 4' ebenfalls ein Endstück 11' auf, das entsprechend dem Endstück 11 der Ausführungsform in Fig. 1 ausgebildet ist und mithin ein Herausziehen verhindern kann.

Da das Rohr 4' durch die Aufsteckvorrichtung 19 hindurch verläuft, kann diese die beim Aufstecken und Abnehmen auftretenden Kräfte aufnehmen, was ein Abbrechen des Rohres 4' verhindert.

Die Volumenentnahme erfolgt bei der Vorrichtung 1'ebenfalls durch Schwerkraft, so daß der Flaschenhals 18 und die in ihm angeordnete Auslaßausnehmung 9' im Entnahmefall nach unten weist. Zur Einstellung des zu entnehmenden Volumens wird das Rohr 4' entsprechend der auf ihm befindlichen Markierungen im Innenraum der Flasche 2' durch axiales Verschieben angeordnet, wobei eine Ablesung des zu entnehmenden Volumens auf einfache Art und Weise von der Volumenmeßeinrichtung 5' auf dem Außenumfang des Rohres 4' erfolgen kann.

Das in Fig. 3 gezeigte Ausführungsbeispiel umfaßt einen Beutel 3, an dessen unterem Endbereich erfindungsgemäß ein Auslaufrohr angeordnet ist, das in der Figur verkürzt, also ohne die Klemmvorrichtung (11) dargestellt ist. Am unteren Endbereich des Beutels 3 ist erfindungsgemäß ein Auslaufrohr 1 angeordnet, welches vertikal verschiebbar ist. Zur Abdichtung zwischen dem Beutel 3 und dem Auslaufrohr 1 dient eine Dichtung 2, welche in Fig. 3 nur in schematischer Weise dargestellt ist. Für die Dichtung ergeben sich vielfältige Ausgestaltungsmöglichkeiten, so ist es möglich, eine O-Ring-Dichtung oder eine Pack-Dichtung zu verwenden.

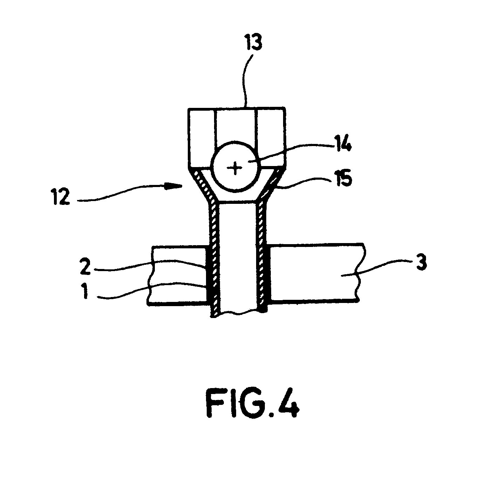

Das Auslaufrohr 1 weist an seinem oberen Ende ein Verschlußelement 12 auf, welches im Zusammenhang mit Figur 4 im einzelen beschrieben ist.

Das Verschlußelement 12 umfaßt, wie in Figur 4 gezeigt, eine Kugel 14, welche ein geringeres spezifisches Gewicht aufweist, als die in dem Beutel 3 auf zunehmende Nahrung. Die Kugel 14 ist in einem Käfig 13 so gehalten, daß diese insbesondere in vertikaler Richtung bewegbar ist. Das Auslaufrohr 1 ist an seinem oberen Ende konisch ausgebildet und umfaßt einen Ventilsitz 15, gegen welchen die Kugel 14 durch Schwerkrafteinfluß dichtend anlegbar ist.

In Figur 3 ist weiterhin dargestellt, daß der Beutel 3 mit einer Skalierung 7 versehen sein kann, an welcher jeweils die Stellung des oberen Endes des Auslaufrohrs 1 ablesbar ist, um das jeweils zu entnehmende Volumen bzw. das entnommene Volumen an Nahrung festzustellen.

Der obere Bereich des Beutels 3 weist weiterhin eine dichtend verschließbare Füllöffnung 16 auf, welche beispielsweise mit einem nur schematisch gezeigten Verschlußstopfen verschließbar ist.

Am oberen Ende des Beutels 3 ist weiterhin eine Aufhängeausnehmung 17 vorgesehen, um den Beutel 3 an einem Haken oder ähnlichem aufzuhängen.

Das in Figur 3 gezeigte Ausführungsbeispiel, bei welchem der Beutel 3 nur eine einzige Kammer 4 aufweist, umfaßt weiterhin eine obere Entlüftungsöffnung 5, durch welche Umgebungsluft in den teilentleerten Beutel 3 einströmen kann. Um ein Entweichen der Flüssigkeit aus dem Beutel 3 zu vermeiden, ist die Entlüftungsöffnung mit einem hydrophoben Filter 6 versehen.

Durch eine vertikale Verschiebung des Auslaufrohres 1 ist es somit möglich, dessen oberen Einlaufbereich auf unterschiedliche Niveaus einzustellen und somit das jeweils zu entnehmende Nahrungsvolumen zu bestimmen.

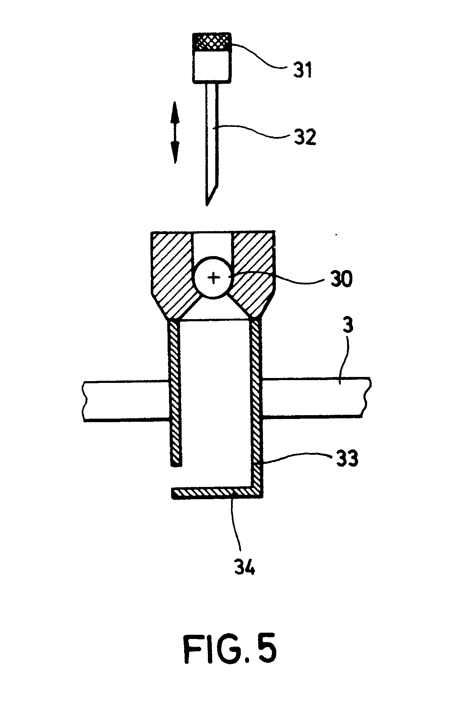

Das in Fig. 1 oder 3 dargestellte Entlüftungselement mit dem hydrophoben Filter 6 kann durch das in Fig.5 gezeigte Bauelement ersetzt werden. Hier bildet ein kugelförmiger Silikonstopfen 30 einen Verschluß, der mittels einer mit einem hydrophoben Filter 31 versehenen Kanüle 32 durchstochen werden kann. An der Unterseite des Entlüftungsrohrs 33 ist ein Schutz 34 vor Durchstechen und Verletzung vorgesehen.

**Patentansprüche**

1. Vorrichtung, vorzugsweise für die enterale Ernährung
   - mit wenigstens einem Gefäß (2; 2') zur Aufnahme der zu verabreichenden Nahrungslösung und
   - mit einer Entnahmeeinrichtung (3, 3') zum Herausleiten der Nahrungslösung aus dem Gefäß (2, 2'), welche ein im Gefäß (2, 2') verschiebbares Rohr (4, 4') aufweist,
   - mit einer Volumenmarkierungseinrichtung zur Anzeige der zu entnehmenden Volumen an Nahrungslösung, und
   - mit einer wahlweise verwendbaren Entlüftungsvorrichtung,

dadurch gekennzeichnet, daß das Gefäß (2, 2') mit einer Dichtungsanordnung (12, 12') versehen ist, die am Gefäßauslaß (9, 9') angeordnet ist, durch die das Rohr (4, 4') verläuft und die als Doppeldichtung ausgebildet ist und zwei in Längsrichtung des Rohres (4, 4') gesehen beabstandete Dichtungselemente (13, 14, 26, 27) aufweist.

2. Vorrichtung nach Anspruch 1, dadurch gekennzeichnet, daß das Rohr (4, 4') an seinem im Gefäß (2, 2') befindlichen Ende (10, 10') ein Endstück (11, 11') aufweist, dessen Außendurchmesser größer ist als der Außendurchmesser des Rohres (4, 4').

3. Vorrichtung nach einem der Ansprüche 1 oder 2, dadurch gekennzeichnet, daß das Rohr (4, 4') einen außerhalb des Gefäßes (2, 2') angeordneten Anschlußabschnitt (15, 15') für die Verbindung mit einem Nahrungsschlauch (16, 16') aufweist.

4. Vorrichtung nach Anspruch 3, dadurch gekennzeichnet, daß im Übergangsbereich zwischen der Dichteinrichtung (12, 12') und dem auf dem Anschlußabschnitt (15, 15') aufgebrachten Nahrungsschlauch (16, 16') ein dehnbarer Schutzschlauch (17, 17') angeordnet ist.

5. Vorrichtung nach einem der Ansprüche 1 bis 4, dadurch gekennzeichnet, daß die Volumenmarkierungseinrichtung (5') auf einer Gefäßwandung (6), oder auf das Rohr (4') der Entnahmeeinrichtung (3') aufgebracht ist.

6. Vorrichtung nach einem derr Ansprüche 1 bis 5, dadurch gekennzeichnet, daß das Gefäß (2) als Beutel ausgebildet ist.

7. Vorrichtung nach einem der Ansprüche 1 bis 6, dadurch gekennzeichnet, daß das Gefäß (2') als Flasche ausgebildet ist, auf deren Hals (18) vorzugsweise eine Aufsteckvorrichtung (19) befestigt ist, welche einen Belüftungskanal (23) aufweist und die Dichtungseinrichtung (12') aufnimmt.

8. Vorrichtung nach einem der Ansprüche 1 bis 7, dadurch gekennzeichnet, daß die Entnahme der Nahrungslösung per Schwerkraft erfolgt.

9. Vorrichtung nach einem der Ansprüche 1 bis 8, dadurch gekennzeichnet, daß am oberen Bereich des Gefäßes eine verschließbare Entlüftungsöffnung vorgesehen ist.

10. Vorrichtung nach Anspruch 9, dadurch gekennzeichnet, daß die Entlüftungsöffnung mit einem hydrophoben Filter ausgestattet ist.

**FIG.1**

FIG.2

FIG.3

FIG.4

31

32

30

3

33

34

FIG. 5